# EUROPEAN PATENT APPLICATION

(11) **EP 4 786 081 A1**
(43) Date of publication of application: **05.08.2026**
(21) Application number: 24869529.8
(22) Date of filing: 02.01.2024
(51) Int. Cl.: B23B 51/04, B23B 51/05, B23B 51/00, B28D 1/14, B28D 1/00, B27G 15/02, B27G 15/00

(54) **HOLLOW HOLE-CUTTING DRILL BIT**

(30) Priority: 28.09.2023 CN 202311277598
(71) Applicant: Tec-Spiral Enterprises Tools Co., Ltd., Songjiang, Shanghai 201613 (CN)
(72) Inventor: WANG, Hongjia, Shanghai 201613 (CN)
(74) Representative: Gunzelmann, Rainer
(86) International application number: PCT/CN2024/070127
(87) International publication number: WO 2025/065957

(57) **Abstract**

The present invention relates to a hollow drill bit, comprising a drill head located at the distal end. The drill head is provided with a plurality of cutting teeth distributed around the working rotation axis, and each cutting tooth comprises a plurality of cutting segments arranged in sequence in an axial direction. While being distributed in sequence towards a proximal side in the axial direction, the plurality of cutting segments is also distributed sequentially towards a radially outer side in a radial direction, thereby forming a stepped structure. The plurality of cutting segments comprise one end segment and one or more circumferential step segments, the end segment is located at a distalmost end of the corresponding cutting tooth in the axial direction and comprises an end cutting edge, and the circumferential step segments are located at the proximal side of the end segment in the axial direction. By the hollow drill bit according to the present invention, cutting forces can be dispersed during drilling, cutting heat and deformation of the cutting teeth can be decreased, and chips can be shunted to thereby prolong the service life of the hollow drill bit.

## Description

### TECHNICAL FIELD

The present invention relates to the field of cutting tools for cutting process, and more specifically, to a hollow drill bit.

### BACKGROUND ART

In industrial production, there are often situations where it is necessary to drill holes with large diameters. If a solid drill bit is used, the drill bit may be subjected to significant stress and generate a large amount of cutting heat. In order to solve the above problems, a hollow drill bit may be used, which eliminates the need to drill the material in the whole volume surrounded by the hole into pieces. Instead, only the material in the annular portion needs to be drilled into pieces. When the hole is drilled through, the material enclosed by this annular portion (generally referred to as the "core") falls out. At present, the hollow drill bits (e.g., core drills for steel plate) are widely used in magnetic base drilling machines, bench drills, drilling-milling machines, etc., to cut holes of various dimensions in plates and remove the cores by annular cutting.

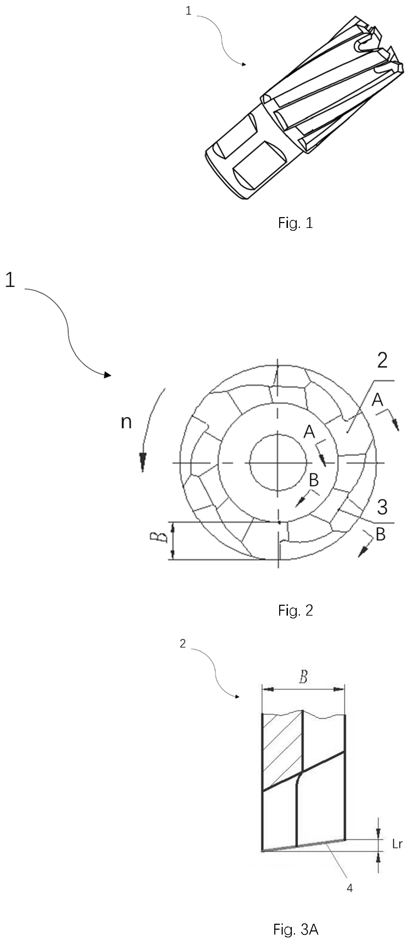

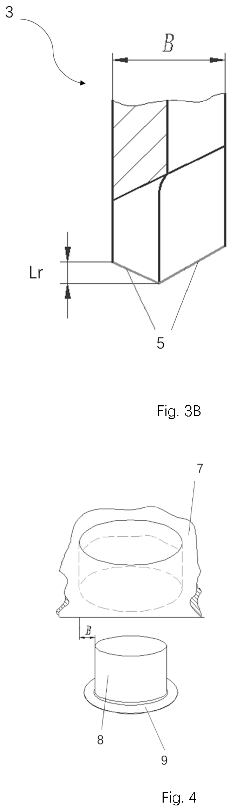

FIG. 1 is a schematic view of a hollow drill bit 1 in the prior art. FIG. 2 is an end view of the hollow drill bit 1 of FIG. 1 as viewed along an axial direction, schematically illustrating two cutting teeth, namely a first cutting tooth 2 and a second cutting tooth 3, where "n" indicates the rotational direction of the hollow drill bit 1 during operation, and "B" represents the thickness of the hollow drill bit 1 in a radial direction. FIGS. 3A and 3B are views of the first cutting tooth 2 and the second cutting tooth 3 as viewed along the A-A direction and B-B direction of FIG. 2, respectively, wherein it can be seen from these views that the main flank face of the first cutting tooth 2 has one section 4 in the radial plane, while the main flank face of the second cutting tooth 3 has two sections 5 at an angle. The shape of the main flank face of each cutting tooth in the abovementioned radial plane reflects the shape of the corresponding major cutting edge.

As further shown in FIGS. 3A and 3B, in the design of such hollow drill bit 1, the length of the cutting edge of the cutting tooth in the axial direction (i.e., associated with the donated "Lr" in FIGS. 3A and 3B) is often relatively short, which results in all cutting teeth participating in the drilling process within a very short time and over a small axial range during drilling. This may lead to high resistance during cutting, which in turn leads to great power consumption. Additionally, this also causes the cross-sectional areas of the chips to be large, resulting in difficult chip evacuation and high cutting heat. This type of hollow drill bit 1 also suffers from issues such as difficult positioning and poor penetration at the initial stage of drilling, which can easily damage the drill bit and the drilling machine. Poor chip evacuation may also lead to the unfavorable phenomenon of chips being evacuated toward the drill core. Furthermore, due to the large cross-sectional areas of the chips, as shown in FIG. 4, when the hole in the workpiece 7 to be machined is about to be drilled through, the thinner portion to be cut is more prone to being torn apart rather than be cut neatly. This can result in a structure 9 resembling a "brim" at the edge of the core 8, making it difficult to drill multiple stacked plate-shaped workpieces 7.

### SUMMARY OF THE INVENTION

Therefore, the present invention aims to provide a hollow drill bit capable of solving at least one of the technical problems existing in the prior art.

The present invention relates to a hollow drill bit. The hollow drill bit includes a drill head located at a distal end of the hollow drill bit, wherein the drill head is provided with a plurality of cutting teeth distributed around a working rotation axis of the hollow drill bit, each cutting tooth including a plurality of cutting segments arranged in sequence in an axial direction,
wherein while being distributed sequentially towards a proximal side in the axial direction, the plurality of cutting segments is also distributed sequentially towards a radially outer side in a radial direction, thereby forming a stepped structure,
wherein the plurality of cutting segments include one end segment and one or more circumferential step segments, the end segment is located at a distalmost end of the corresponding cutting tooth in the axial direction and includes an end cutting edge, the circumferential step segments are located at the proximal side of the end segment in the axial direction, and each circumferential step segment extends substantially in a circumferential direction and includes a major cutting edge and a minor cutting edge.

By the hollow drill bit according to the present invention, cutting forces can be dispersed during drilling, cutting resistance and power can be reduced, cutting heat and deformation of the cutting teeth can be decreased, and chips can be shunted to reduce the area of individual chips, thus facilitating chip evacuation, preventing the chips from being stuck, reducing the risk of the chips being evacuated towards the core, and accordingly helping to prolong the service life of the hollow drill bit and improve machining quality. Furthermore, the hollow drill bit according to the present invention can achieve accurate positioning and easy cutting upon initial cutting into the workpiece to be machined, which reduces the likelihood of damage and scrap of the hollow drill bit during use. Additionally, the hollow drill bit according to the present invention also helps to undercut the core to reduce the brim-like structure at the bottom of the core, enabling continuous drilling through stacked workpieces.

In some embodiments, the major cutting edge of the circumferential step segment is:
- configured to be a single-section type, and thus includes a single major cutting edge section; or
- configured to be a multi-section type, and thus includes a plurality of major cutting edge sections, with an angle being formed between every two adjacent cutting edge sections of the plurality of major cutting edge sections.

In some embodiments, one or more of the cutting teeth each includes a plurality of circumferential step segments, and the major cutting edges and the minor cutting edges of the plurality of circumferential step segments are respectively the same in their orientations and dimensions.

In some embodiments, one or more of the cutting teeth each includes a plurality of circumferential step segments, and the plurality of circumferential step segments satisfy one or more of the following items:
the major cutting edge of each circumferential step segment is configured to be a single-section type, and orientations and/or dimensions of the respective major cutting edges differ from each other at least in part;
the number of segments of the major cutting edges of the respective circumferential step segments differ from each other at least in part;
orientations and/or dimensions of the minor cutting edges of the respective circumferential step segments differ from each other at least in part.

In some embodiments, the end cutting edge and the major cutting edges of the respective circumferential step segments are each configured to be single-section type, and a rake angle of the end cutting edge and rake angles of the major cutting edges of the respective circumferential step segments are each set to between -30**°** and+30**°**.

In some embodiments, in an axial plane, a thickness of the end segment in the radial direction and a thickness of each circumferential step segment in the radial direction are one-half to one-fifth of a wall thickness of the hollow drill bit in the radial direction respectively; and/or,
the sum of the thickness of the end segment in the radial direction and the thicknesses of the respective circumferential step segments in the radial direction is equal to the wall thickness of the hollow drill bit in the radial direction.

In some embodiments, the end cutting edge is:
- configured to be a single-section type, and thus includes a single cutting edge section; or
- configured to be a multi-section type, and thus includes a plurality of cutting edge sections, with an angle being formed between every two adjacent cutting edge sections of the plurality of cutting edge sections.

In some embodiments, in an axial plane, a thickness of the end segment in the radial direction is equal to or at least partially unequal to thicknesses of the respective circumferential step segments in the radial direction; and/or
the end cutting edge and the major cutting edges of the respective circumferential step segments are each configured to be a single-section type, and a rake angle of the end cutting edge is equal to or at least partially unequal to rake angles of the major cutting edges of the respective circumferential step segments.

In some embodiments, in the axial direction, a total length of the plurality of cutting segments of each cutting tooth is not less than half of a depth of a slot between said cutting tooth and any adjacent cutting tooth.

In some embodiments, at least two of the plurality of cutting teeth have the same tooth profile.

In some embodiments, at least two of the plurality of cutting teeth have different tooth profiles and satisfy one or more of the following items:
the at least two cutting teeth have end segments with different configurations;
the at least two cutting teeth have different numbers of circumferential step segments;
the major cutting edges and the minor cutting edges of the circumferential step segments of the at least two cutting teeth in the same order starting from the circumferential step segment at the distalmost side in the axial direction differ from each other at least partially in their orientations and dimensions, respectively.

In some embodiments, the at least two cutting teeth have end segments with different configurations, and satisfy one or more of the following items:
the numbers of the cutting edge sections of the end cutting edges are different;
the major cutting edge angles of the cutting edge sections located at an innermost end in the radial direction of the end cutting edges are different;
each end cutting edge is configured to be a single-section type, and the lengths and/or rake angles of the end cutting edges are different.

In some embodiments, the at least two cutting teeth have different numbers of circumferential step segments, and the major cutting edges and the minor cutting edges of the respective circumferential step segments of the at least two cutting teeth in the same order starting from the circumferential step segment at the distalmost side in the axial direction have the same orientations and dimensions, respectively.

In some embodiments, the respective circumferential step segments of the at least two cutting teeth in the same order starting from the circumferential step segment at the distalmost side in the axial direction satisfy one or more of the following items:
the major cutting edge of each circumferential step segment is configured to be a single-section type, and the orientations and/or dimensions of the major cutting edges of the respective circumferential step segments are different from each other;
the major cutting edge of each circumferential step segment is configured to be a single-section type, and rake angles of the major cutting edges of the respective circumferential step segments are different;
the numbers of segments of the major cutting edges of the respective circumferential step segments are different;
the orientations and/or dimensions of the minor cutting edges of the respective circumferential step segments are different.

In some embodiments, the at least two cutting teeth satisfy one or both of the following items:
distal ends in the axial direction are located at different axial positions;
inner ends in the radial direction are located at different radial positions.

In some embodiments, the at least two cutting teeth are arranged adjacently to each other in the circumferential direction, the at least two cutting teeth constitute a cutting tooth group, and the hollow drill bit includes a plurality of cutting tooth groups arranged in subsequence in the circumferential direction.

In some embodiments, the at least two cutting teeth include a first cutting tooth and a second cutting tooth, wherein the first cutting tooth includes one circumferential step segment and the second cutting tooth includes two circumferential step segments.

In some embodiments, the plurality of cutting teeth is arranged at uniform intervals around the working rotation axis of the hollow drill bit.

In some embodiments, the hollow drill bit includes at least one first cutting tooth, the end cutting edge and the major cutting edges of the respective circumferential step segments of the first cutting tooth are each configured to be a single-section type and include at least one arc-shaped cutting edge, and each of the arc-shaped cutting edges is recessed inward towards the working rotation axis or protrudes outward away from the working rotation axis in the radial direction.

In some embodiments, the first cutting tooth includes a plurality of arc-shaped cutting edges, which have the same dimension and strike.

In some embodiments, the first cutting tooth only includes the aforesaid arc-shaped cutting edge, and the hollow drill bit includes at least one second cutting tooth, wherein the end cutting edge and the major cutting edges of the respective circumferential step segments of the second cutting tooth are each configured to be a single-section type and only include straight cutting edges; preferably, the second cutting tooth includes a plurality of the circumferential step segments, and the major cutting edges of the respective circumferential step segments have the same orientations and dimensions.

In some embodiments, the first cutting tooth and the second cutting tooth have the same number of circumferential step segments.

In some embodiments, the first cutting tooth and the second cutting tooth are arranged adjacently to each other in the circumferential direction to form a cutting tooth group, and the hollow drill bit includes a plurality of cutting tooth groups.

In some embodiments, the first cutting tooth and the second cutting tooth satisfy one or both of the following items:
distal ends in the axial direction are located at different axial positions;
inner ends in the radial direction are located at different radial positions.

The technical features mentioned above, the technical features to be mentioned below, and the technical features individually shown in the accompanying drawings may be arbitrarily combined with each other, provided that the combined technical features are not mutually contradictory. All feasible combinations of the features are explicitly recited technical contents herein. Any sub-feature among multiple sub-features included in the same sentence may be applied independently and does not necessarily have to be applied together with other sub-features.

### BRIEF DESCRIPTION OF THE DRAWINGS

The present invention is further described below with reference to the accompanying drawings and embodiments, wherein:
FIG. 1 is a perspective view of a hollow drill bit in the prior art.
FIG. 2 is a schematic end view of the hollow drill bit of FIG. 1 as viewed along the axial direction, in which the positions of the first cutting tooth and the second cutting tooth are marked.
FIGS. 3A and 3B are views viewed along the A-A direction and the B-B direction of FIG. 2 respectively.
FIG. 4 is a schematic view showing a workpiece machined by some hollow drill bits in the prior art and the core removed by annular cutting.
FIG. 5 is a perspective view of a hollow drill bit according to some embodiments of the present invention.
FIG. 6 is a schematic end view of the hollow drill bit of FIG. 5 as viewed along the axial direction, in which exemplary positions of the first cutting tooth and the second cutting tooth are marked.
FIG. 7A is a side view of the hollow drill bit of FIG. 5, in which the position of the first cutting tooth is marked.
FIG. 7B is an enlarged perspective view of the first cutting tooth of FIG. 7A.
FIG. 7C is a view of the first cutting tooth according to some embodiments of the present invention as viewed along the M-M direction of FIG. 6.
FIG. 7D is an end view of the first cutting tooth according to some embodiments of the present invention in an axial plane as viewed along the axial direction of the hollow drill bit of FIG. 5.
FIG. 8A is a side view of the hollow drill bit of FIG. 5, in which the position of the second cutting tooth is marked.
FIG. 8B is an enlarged perspective view of the second cutting tooth of FIG. 8A.
FIG. 8C is a view of the second cutting tooth according to some embodiments of the present invention as viewed along the Q-Q direction of FIG. 6.
FIG. 8D is an end view of the second cutting tooth according to some embodiments of the present invention in the axial plane as viewed along the axial direction of the hollow drill bit of FIG. 5.
FIG. 9 is a schematic view showing a workpiece machined by the hollow drill bit of FIG. 5 and the core removed by annular cutting.
FIG. 10 is a perspective view of a hollow drill bit according to some other embodiments of the present invention.
FIGS. 11A and 11B are perspective views of a drill head of the hollow drill bit according to some other embodiments of the present invention.
FIG. 12 is a perspective view of a hollow drill bit according to further embodiments of the present invention.
FIG. 13 is a schematic view showing a circumferential step segment on the first cutting tooth and a circumferential step segment on the second cutting tooth rotated to the same circumferential position, of a hollow drill bit according to some embodiments of the present invention, as viewed in a direction perpendicular to the axial direction, in which the major cutting edges of the two circumferential step segments shown are both arc-shaped cutting edges and are recessed inward towards the working rotation axis in the radial direction.
FIG. 14 is a schematic view showing a circumferential step segment on the first cutting tooth and a circumferential step segment on the second cutting tooth rotated to the same circumferential position, of a hollow drill bit according to some embodiments of the present invention, as viewed in a direction perpendicular to the axial direction, in which the major cutting edges of the two circumferential step segments shown are both arc-shaped cutting edges and are protruded outward away from the working rotation axis in the radial direction.

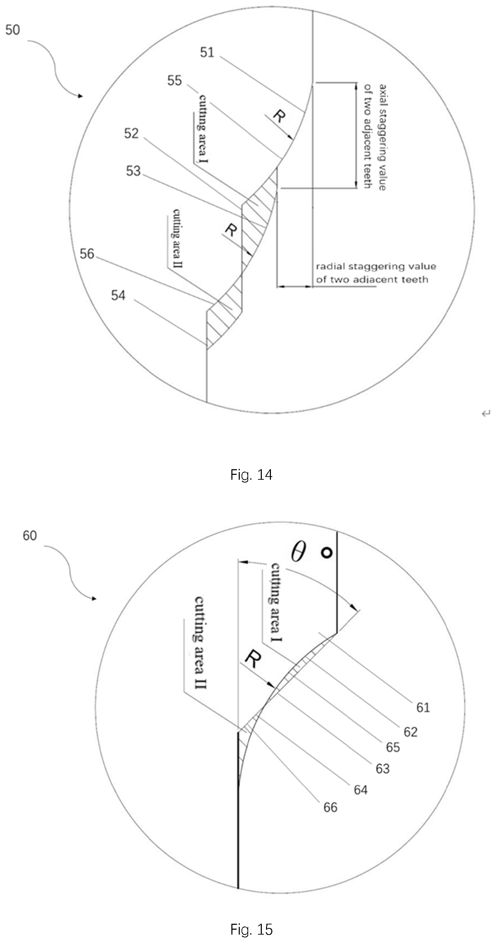

FIG. 15 is a schematic view showing a circumferential step segment on the first cutting tooth and a circumferential step segment on the second cutting tooth rotated to the same circumferential position, of a hollow drill bit according to some embodiments of the present invention, as viewed in a direction perpendicular to the axial direction, in which one of the major cutting edges of the two circumferential step segments shown is an arc-shaped cutting edge and is recessed inward toward the working rotation axis in the radial direction, while the other major cutting edge is a straight cutting edge.

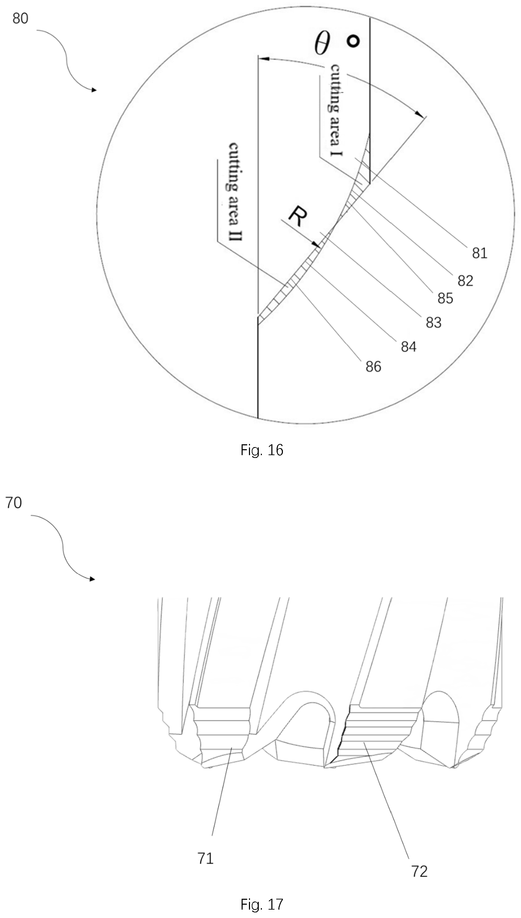

FIG. 16 is a schematic view showing a circumferential step segment on the first cutting tooth and a circumferential step segment on the second cutting tooth rotated to the same circumferential position, of a hollow drill bit according to some embodiments of the present invention, as viewed in a direction perpendicular to the axial direction, in which one of the major cutting edges of the two circumferential step segments shown is an arc-shaped cutting edge and is protruded outward away from the working rotation axis in the radial direction, while the other major cutting edge is a straight cutting edge.
FIG. 17 is a partial perspective view of a hollow drill bit according to some embodiments of the present invention.

### EMBODIMENTS

Various illustrative embodiments of the present invention are described below. For the sake of explanation only, various systems, structures and devices are schematically depicted in the accompanying drawings, but not all features of actual systems, structures and devices are described; for example, well-known functions or structures are not described in detail to avoid obscuring the present invention with unnecessary particulars. It should, of course, be understood that in any actual application, numerous specific implementation decisions must be made to achieve the specific objectives of a developer or user, and system-related and industry-related constraints must be complied with, which specific objectives may vary with different actual applications. Furthermore, it should be understood that such specific implementation decisions, while complex and time-consuming, are routine tasks for those of ordinary skill in the art who benefit from the present application.

The terms and phrases used herein shall be understood and interpreted as having meanings consistent with those understood by those skilled in the relevant art. Consistent use of terms or phrases herein is not intended to imply a special definition of such terms or phrases, i.e., a definition that differs from the ordinary and customary meaning understood by those skilled in the art. For terms or phrases intended to have a special meaning, i.e., a meaning different from that understood by those skilled in the art, such special definition will be explicitly set forth in the specification in a definitional manner, providing the special definition of the term or phrase directly and unambiguously.

Unless the context requires otherwise, throughout the following specification, the word "comprise" and its variants, such as "include", shall be interpreted in an open, inclusive sense, i.e., as "including but not limited to".

Throughout the description in this specification, references to terms such as "an embodiment", "one embodiment", "some embodiments", "example", "specific example", "some examples" or the like indicate that the specific features, structures, materials or characteristics described in connection with said embodiment(s) or example(s) are included in at least one embodiment or example of the present invention. Thus, the appearances of the phrases "in one embodiment" or "in an embodiment" in various places throughout this specification are not necessarily all referring to the same embodiment. Furthermore, the specific features, structures, materials, or characteristics described may be combined in a suitable manner in any one or more embodiments or examples.

In addition, terms such as "first", "second", or the like are used merely for descriptive purposes, and shall not be construed as indicating or implying relative importance or implicitly indicating the number of the technical features indicated. Thus, a feature defined with "first", "second" or the like may explicitly or implicitly include one or more of such features. In the description of the present invention, the term "plurality" means two or more, unless expressly defined otherwise.

In the present invention, unless expressly specified and defined otherwise, the terms "mount", "connect", "couple", "link", "fix" and the like shall be construed in a broad sense; for example, they may refer to a fixed connection, a detachable connection, or an integral connection; they may refer to a direct connection, or an indirect connection via an intermediate medium, or an internal communication between two elements. For those of ordinary skill in the art, the specific meanings of the above terms in the present invention can be understood according to specific circumstances.

In the following description of the accompanying drawings, the same reference signs refer to similar or identical elements throughout the drawings and their description. Furthermore, the various features in the drawings discussed below are not necessarily drawn to scale. The dimensions of the various features and elements in the drawings may be exaggerated or reduced to more clearly illustrate the embodiments of the present invention. For supplementary aspects of the teachings that can be directly identified from the attached drawings, reference is made to the relevant prior art. It should be noted here that various modifications and changes may be made in the form and details of the embodiments without departing from the general concept of the present invention.

Hereinafter, some embodiments of the hollow drill bit of the present invention will be described in detail with reference to various figures of description. In this specification, unless otherwise specified, the direction along the working rotation axis about which the hollow drill bit rotates during drilling operations is defined as an axial direction; the direction of rotation of the cutting teeth of the hollow drill bit during drilling operation is defined as a circumferential direction; the direction perpendicular to the axial direction of the hollow drill bit is defined as a radial direction; the plane passing through the aforementioned rotation axis is defined as a radial plane; and the plane perpendicular to the aforementioned rotation axis is defined as an axial plane. Additionally, for the convenience of description, the side of the hollow drill bit closer to the workpiece to be machined may be defined as a distal side, and the side away from the workpiece to be machined (i.e., the side closer to the operator) may be defined as a proximal side.

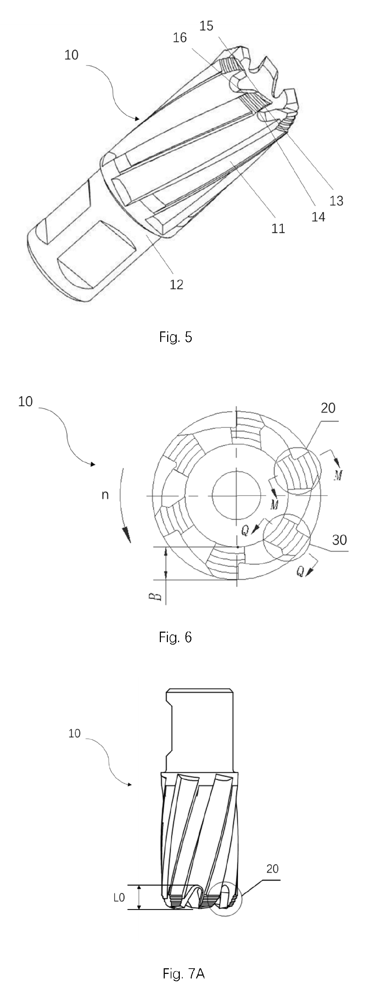

As shown in FIG. 5, a hollow drill bit 10 according to some embodiments of the present invention may include a drill head 11 at a distal end and a shank 12 positioned proximally to the drill head 11, wherein the drill head 11 and the shank 12 may be integrally formed. The drill head 11 may include a plurality of cutting teeth 13 distributed about a rotation axis, and configured to cooperate with each other to drill a workpiece to be machined, so as to remove an annular portion of material and annularly cut out a cylindrical core. Advantageously, the cutting teeth 13 may be arranged at uniform intervals around the working rotation axis of the hollow drill bit 10, which helps balance the force on the hollow drill bit 10 during the drilling operation and thus contributes to extending the service life of the hollow drill bit 10.

As shown in FIG. 5, each cutting tooth 13 may include a plurality of cutting segments 14 arranged sequentially in the axial direction. These cutting segments 14 may be configured such that as they are distributed sequentially toward the proximal side in the axial direction, they are also distributed sequentially towards the radially outer side along the radial direction, thereby forming a stepped structure. The cutting segments 14 may extend in the circumferential direction between the proximal end and the distal end. The plurality of cutting segments 14 forming the stepped structure enable the total axial length of all the cutting segments 14 of the cutting tooth 13 to be increased, and the cutting tooth 13 can cut into the workpiece to be machined in a stepwise manner, such that the cutting force acting on the cutting tooth 13 can be effectively decomposed and dispersed. Accordingly, this facilitates the dissipation of cutting heat and the miniaturization of areas of the chips, thereby contributing to the smooth removal of the chips, reducing the formation of built-up edges, and extending the service life of the hollow drill bit 10.

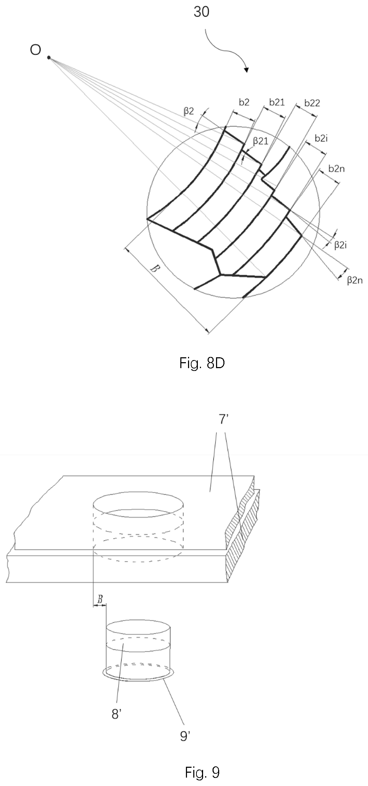

In addition, as the cutting segment 14 of the cutting tooth 13 that initially contacts and cuts into the workpiece to be machined has a small dimension in the radial direction, it facilitates to drill the hollow drill bit 10 into the workpiece to be machined with relatively accurate positioning, thereby reducing relative wobble between the hollow drill bit 10 and the workpiece to be machined, and improving machining accuracy and quality. When the drilling of the hole in the workpiece to be machined is about to be completed, likewise, as the cutting segment 14 of the cutting tooth 13 that finally contacts and cuts into the workpiece to be machined has a small dimension in the radial direction, it helps to reduce the relative wobble between the hollow drill bit 10 and the workpiece to be machined. Thus, in the case where there is a rigid object supporting the lower surface of the workpiece to be machined, the formation of a brim-like structure can be reduced or avoided. For example, as shown in FIG. 9, this allows the hollow drill bit 10 to be used to machine two or more stacked workpieces 7', and only a small brim-like structure 9' is formed below the core 8' cut out from the lowermost workpiece 7', or even no brim-like structure 9' is formed at all.

The cutting segments 14 may include an end segment 15 located at the distalmost end in the axial direction, and circumferential step segments 16 positioned proximal to the end segment 15 in the axial direction. As shown in FIG. 5, each circumferential step segment 16 may be configured to extend substantially along the circumferential direction.

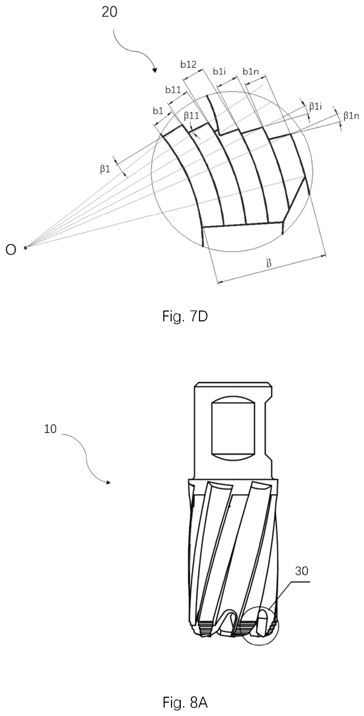

Next, a first cutting tooth 20 and a second cutting tooth 30 of the hollow drill bit 10 according to some embodiments of the present invention will be further described with reference to FIGS. 7A to 7D and FIGS. 8A to 8D. The first cutting tooth 20 and the second cutting tooth 30 may be positioned, for example, at the locations shown in FIG. 6 in the circumferential direction.

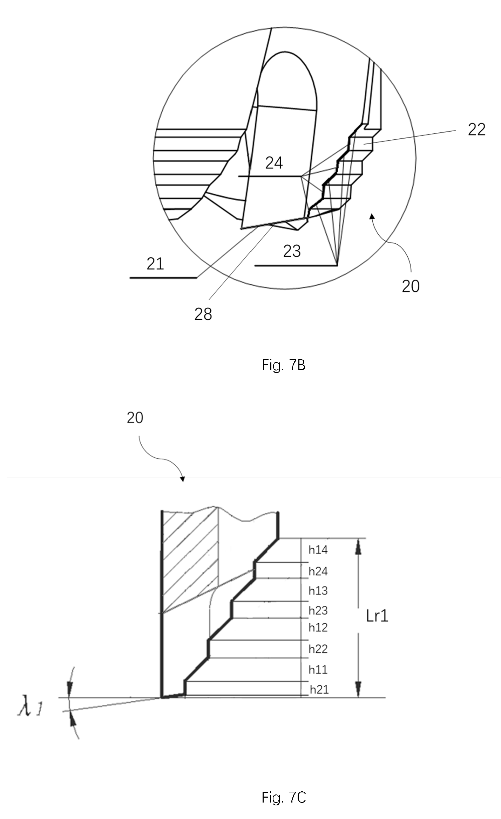

As shown in FIG. 7A, the hollow drill bit 10 may include the first cutting tooth 20. As shown in FIG. 7B, the first cutting tooth 20 may include an end segment 21 and a plurality of circumferential step segments 22. The end segment 21 may include an end cutting edge 28, and each circumferential step segment 22 includes a major cutting edge 23 and a minor cutting edge 24.

As shown in FIG. 7B, the end cutting edge 28 of the first cutting tooth 20 may be configured as a single-section type, and thus includes a single cutting edge section. The major cutting edge 23 of each circumferential step segment 22 of the first cutting tooth 20 may also be configured as a single-section type, and thus includes a single major cutting edge section. In other embodiments, the end cutting edge 28 of the first cutting tooth 20 may be configured as a multi-section type and thus may include a plurality of cutting edge sections, where a certain angle is formed between adjacent cutting edge sections of the plurality of cutting edge sections. In other embodiments not shown, the major cutting edge 23 of each circumferential step segment 22 of the first cutting tooth 20 may also be configured as a multi-section type, and thus include multiple major cutting edge sections, where a certain angle is formed between adjacent cutting edge sections of the plurality of major cutting edge sections.

FIG. 7C is a view of the first cutting tooth 20 as viewed along the M-M direction of FIG. 6 according to some embodiments of the present invention. As shown in FIG. 7C, the orientations and dimensions of the major cutting edges 23 and the minor cutting edges 24 of the respective circumferential step segments 22 of the first cutting tooth 20 may be configured to be identical to each other, respectively, so as to facilitate machining and manufacturing and contribute to uniform heat generation during the drilling process. For example, as shown in FIG. 7C, heights h11, h12, h13, h14 in the axial direction of the major cutting edges 23 of the respective circumferential step segments 22 of the first cutting tooth 20 may be set to be the same, and heights h21, h22, h23, h24 of the minor cutting edges 24 in the axial direction may be set to be the same. Additionally, all the major cutting edges 23 may have the same orientation, and all the minor cutting edges 24 may have the same orientation. It is advantageous that the sum Lr1 of the heights in the axial direction of all cutting segments (i.e., including the end segment 21 and the plurality of circumferential step segments 22) of the first cutting tooth 20 is set to be not less than half of the depth L0 of a slot between the first cutting tooth 20 and any adjacent cutting tooth (e.g., as shown in FIG. 7A). For example, said sum of the heights Lr1 may be set to 60%, 80%, 90%, etc., of the depth L0.

In other embodiments not shown, the dimensions and orientations of the major cutting edges 23 and the minor cutting edges 24 of the respective circumferential step segments 22 of the first cutting tooth 20 may differ from one another at least in part to meet different drilling requirements. For example, the major cutting edge 23 of each circumferential step segment 22 of the first cutting tooth 20 may be configured as a single-section type, and the orientations and/or dimensions of the respective major cutting edges 23 may be set to differ from one another at least in part. For example, the number of segments of the major cutting edges 23 of the respective circumferential step segments 22 of the first cutting tooth 20 may be set to differ from one another at least in part. For example, the orientations and/or dimensions of the minor cutting edges 24 of the respective circumferential step segments 22 of the first cutting tooth 20 may be set to differ from one another at least in part.

FIG. 7D is an end view of the first cutting tooth 20 according to some embodiments of the present invention as viewed along the axial direction of the hollow drill bit 10 of FIG. 5, in which a rake angle β1 of the end cutting edge 28 and rake angles β11, β1i β1n of some major cutting edges 23 of the circumferential step segments 22 are schematically shown, where i may be equal to 1, 2, 3...n and represents the sequence number of each circumferential step segment counted from the circumferential step segment at the distalmost side. Position "O" denotes the location of the working rotation axis of the hollow drill bit 10. Advantageously, each of the aforementioned rake angles may be set to be between -30° and 30°. In some embodiments, the rake angle β1 of the end cutting edge 28 may be set to be equal to one or more of the rake angles β11...β1i...β1n of the major cutting edges 23 of the respective circumferential step segments 22, or may be set to be unequal to any of the rake angles β11...β1i...β1n of the major cutting edges 23 of the respective circumferential step segments 22. The rake angles β11...β1i...β1n of the respective major cutting edges 23 may be set to be equal to one another, or unequal to one another at least in part.

FIG. 7D further illustrates the thickness b1 of the end segment 21 in the radial direction and the thicknesses b11, b12, b1i, b1n of the plurality of circumferential step segments 22 in the radial direction in a projection on the axial plane. Advantageously, the sum of the thickness b1 of the end segment 21 in the radial direction and the thicknesses b11, b12, b1i, b1n of the plurality of circumferential step segments 22 in the radial direction is equal to the wall thickness B of the hollow drill bit 10 in the radial direction. Each of the aforementioned thicknesses in the radial direction may be set to a value ranging from one half to one fifth of the wall thickness B of the hollow drill bit 10 in the radial direction. Advantageously, in some embodiments, the thickness b1 of the end segment 21 in the radial direction may be set to be equal to one or more of the thicknesses b11, b12...b1i...b1n of the respective circumferential step segments 22 in the radial direction, or may be set to be unequal to any of the thicknesses b11, b12...b1i...b1n of the respective circumferential step segments 22 in the radial direction. The thicknesses b11, b12...b1i...b1n of the respective circumferential step segments 22 in the radial direction may be set to be equal to one another, or unequal to one another at least in part.

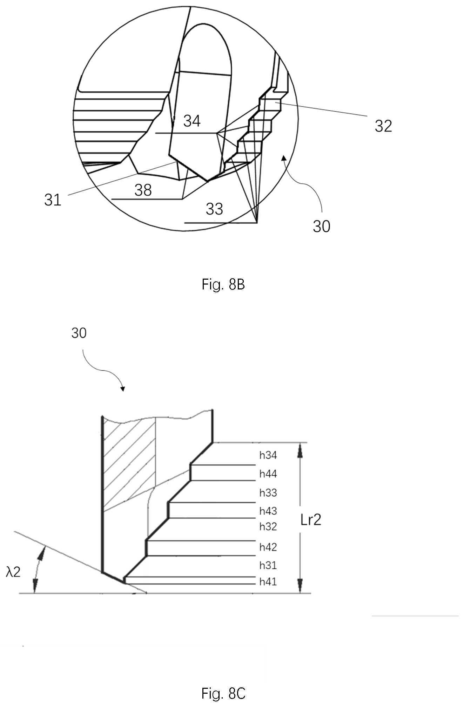

FIGS. 8A to 8D illustrate the second cutting tooth 30 of the hollow drill bit 10 according to some embodiments of the present invention. For example, as shown in FIGS. 8A to 8B, the configuration of the second cutting tooth 30 may be substantially the same as that of the first cutting tooth 20, with the main difference being that the end cutting edge 38 of the end segment 31 of the second cutting tooth 30 may be configured as a two-segment type and thus may include two cutting edge sections, wherein a certain angle is formed between the two cutting edge sections. Additionally, FIG. 8B schematically shows the corresponding circumferential step segments 32 of the second cutting tooth 30, as well as the corresponding major cutting edges 33 and minor cutting edges 34 of the circumferential step segments 32.

It should be understood that, in addition to the aforementioned first cutting tooth 20 and second cutting tooth 30, the hollow drill bit 10 according to the present invention may also include one or more other shapes of the cutting teeth 13, which will not be described in detail here.

In the hollow drill bit 10 shown in FIG. 5, at least two of the plurality of cutting teeth 13 may be configured such that their distalmost ends in the axial direction are located at different axial positions. During drilling by such a hollow drill bit 10, the cutting teeth 13 at different axial positions do not contact the workpiece to be machined simultaneously but instead contact the workpiece and begin drilling successively. This helps to distribute the cutting force and reduce cutting heat, thereby helping to reduce deformation of the cutting teeth 13 and prolonging the service life of the hollow drill bit 10. The aforementioned at least two cutting teeth 13 may be arranged adjacently to each other in the circumferential direction. Advantageous, the aforementioned at least two cutting teeth 13 arranged adjacently to each other form a cutting tooth group, and the hollow drill bit 10 may include a plurality of such cutting tooth groups arranged successively along the circumferential direction. This helps to achieve force balance during the rotation of the hollow drill bit 10, thereby further prolonging the service life of the hollow drill bit 10.

In other embodiments, the at least two cutting teeth 13 described above may alternatively or further be arranged such that their innermost ends in the radial direction are located at different radial positions. During drilling by such a hollow drill bit 10, simultaneous material removal can be performed at different locations of the workpiece to be machined, which helps to improve drilling efficiency, disperse cutting forces and reduce cutting heat, thereby contributing to reducing deformation of the cutting teeth 13 and prolonging the service life of the hollow drill bit 10.

As described above, at least two cutting teeth 13 of the hollow drill bit 10 according to the embodiments of the present invention may be configured to be staggered relative to each other in one or both of the axial direction and the radial direction, which is helpful to reduce or avoid periodic vibrations of the hollow drill bit 10 during the drilling process, making the drilling process more stable, thus contributing to improving the machining accuracy and smoothness. Additionally, it helps to disperse cutting forces, reduce cutting heat, and reduce deformation of the cutting teeth 13, thereby prolonging the service life of the hollow drill bit 10.

The at least two cutting teeth 13 as described above may have the same tooth profile to facilitate machining and manufacturing. Alternatively, the at least two cutting teeth 13 as described above may also have different tooth profiles so as to help to accommodate various drilling requirements, such as further dispensing cutting forces and reducing cutting heat.

For example, the respective cutting teeth 13 may have end segments 15 of different configurations. For instance, in the first cutting tooth 20 and the second cutting tooth 30 as described above, the end cutting edge 28 of the end segment 21 of the first cutting tooth 20 and the end cutting edge 38 of the end segment 31 of the second cutting tooth 30 have different numbers of cutting edge sections. In addition, major cutting edge angles of the cutting edge sections located at the radially innermost end of the end segments 15 of the respective cutting teeth 13 may be set to differ from one another. For example, FIG. 7C shows the major cutting edge angle λ1 of the cutting edge section located at the radially innermost end of the end cutting edge 28 of the end segment 21 of the first cutting tooth 20 according to some embodiments of the present invention, and FIG. 8C shows the major cutting edge angle λ2 of the cutting edge section located at the radially innermost end of the end cutting edge 38 of the end segment 31 of the second cutting tooth 30 according to some embodiments of the present invention, where the major cutting edge angle λ1 and the major cutting edge angle λ2 may be unequal. As another example, in the case where the end cutting edges of the end segments 15 of the respective cutting teeth 13 are each configured as a single-section type, the lengths of the respective end cutting edges may be set to differ from one another.

It should be understood, however, that the end segments 15 of the aforementioned respective cutting teeth 13 may be configured identical to one another in one or more of the following aspects: the number of the cutting edge sections, the major cutting edge angles of the cutting edge sections located at the radially innermost end, and the lengths of the respective end cutting edges in the case where the end cutting edges of the end segments 15 of the respective cutting teeth 13 are each configured as a single-section type.

For example, the respective cutting teeth 13 may have different numbers of circumferential step segments 16, and the dimensions and orientations of the major cutting edges and the minor cutting edges of the circumferential step segments 16 in the same order, starting from the distalmost circumferential step segment 16 in the axial direction, of the respective cutting teeth 13 may differ from one another at least in part. For instance, for the respective circumferential step segments 16 in the same order, the major cutting edge of each circumferential step segment 16 may be configured as a single-section type, and the orientations and/or dimensions of the major cutting edges of the respective circumferential step segments 16 may differ from one another at least in part. As another example, for the respective circumferential step segments 16 in the same order, the number of segments of the major cutting edges of the respective circumferential step segments 16 may be set to differ from one another at least in part. As a further example, for the respective circumferential step segments 16 in the same order, the orientations and/or dimensions of the minor cutting edges of the respective circumferential step segments 16 may be set to differ from one another at least in part. As an additional example, for the respective circumferential step segments 16 in the same order, the major cutting edge of each circumferential step segment 16 may be configured as a single-section type, and the major cutting edges of the respective circumferential step segments 16 may have different rake angles.

It should be understood, however, that the aforementioned respective cutting teeth 13 may be configured identical to one another in one or more of the following aspects: the number of the circumferential step segments 16, the number of segments of the major cutting edges of the circumferential step segments 16 in the same order starting from the distalmost circumferential step segment 16 in the axial direction, the orientations and/or dimensions of the major cutting edges of the respective circumferential step segments 16 in the case where the major cutting edges are configured as a single-section type, the orientations and/or dimensions of the minor cutting edges, and the rake angles of the major cutting edges of the respective circumferential step segments 16 in the case where the major cutting edges are configured as a single-section type.

For example, as shown in Figures 7C and 8C, the height h11 of the major cutting edge 23 of the first circumferential step segment 22 (counted from the distalmost side in the axial direction) of the first cutting tooth 20 and the height h31 of the major cutting edge 33 of the first circumferential step segment 32 (counted from the distalmost side in the axial direction) of the second cutting tooth 30 may be equal or unequal. Similarly, the heights h12, h13...h1i, h1n of the major cutting edges 23 of the second, third...i^{th}, n^{th} circumferential step segments 22 (counted from the distalmost side in the axial direction) of the first cutting tooth 20 and the heights h32, h33...h3i, h3n of the major cutting edges 33 of the corresponding second, third...i^{th}, n^{th} circumferential step segments 32 (counted from the distalmost side in the axial direction) of the second cutting tooth 30 may be equal or unequal.

For example, as shown in FIGS. 7C and 8C, the height h21 of the minor cutting edge 24 of the first circumferential step segment 22 (counted from the distalmost side in the axial direction) of the first cutting tooth 20 and the height h41 of the minor cutting edge 34 of the first circumferential step segment 32 (counted from the distalmost side in the axial direction) of the second cutting tooth 30 may be equal or unequal. Similarly, the heights h22, h23...h2i, h2n of the minor cutting edges 24 of the second, third... i^{th}, n^{th} circumferential step segments 22 (counted from the distalmost side in the axial direction) of the first cutting tooth 20 and the heights h42, h43...h4i, h4n of the minor cutting edges 34 of the corresponding second, third... i^{th}, n^{th} circumferential step segments 32 (counted from the distalmost side in the axial direction) of the second cutting tooth 30, may be equal or unequal.

For example, as shown in FIGS. 7D and 8D, the rake angle β1 of the end cutting edge 28 of the first cutting tooth 20 and the rake angle β2 of the end cutting edge 38 of the second cutting tooth 30 may be equal or unequal. For instance, the rake angles β11...β1i, β1n of the respective major cutting edges 23 (starting from the first circumferential step segment 22 at the distalmost side in the axial direction) of the first cutting tooth 20 and the corresponding rake angles β21...β2i, β2n of the respective major cutting edges 33 (starting from the first circumferential step segment 32 at the distalmost side in the axial direction) of the second cutting tooth 30 may be equal or unequal.

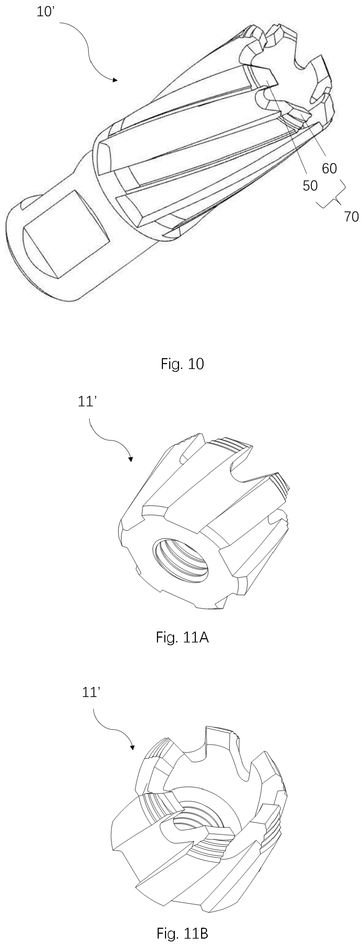

For example, FIG. 10 illustrates a hollow drill bit 10' according to some embodiments of the present invention. As shown, the first cutting tooth 50 and the second cutting tooth 60 of the hollow drill bit 10' arranged adjacently to each other can constitute a cutting tooth group 70, and the hollow drill bit 10' may include a plurality of cutting tooth groups 70 arranged successively in the circumferential direction. For example, the hollow drill bit 10' may include three successive cutting tooth groups 70. The dimensions and orientations of the major cutting edges and the minor cutting edges of the circumferential step segments in the same order (starting from the circumferential step segment at the distalmost side in the axial direction) of the first cutting tooth 50 and of the second cutting tooth 60 may be at least partially different from each other, for instance, the aforementioned circumferential step segments in the same order may have the major cutting edges and the minor cutting edges of different lengths. The first cutting tooth 50 and the second cutting tooth 60 may also have different numbers of circumferential step segments. For example, as shown in FIG. 10, the first cutting tooth 50 may have one circumferential step segment, while the second cutting tooth 60 may have two circumferential step segments. Optionally, the distalmost ends of the first cutting tooth 50 and the second cutting tooth 60 in the axial direction may be located at different axial positions. Optionally, the innermost ends of the first cutting tooth 50 and the second cutting tooth 60 in the radial direction may be located at different radial positions. In the drilling process by such constructed hollow drill bit 10', the cutting edges of each circumferential step segment of each cutting tooth are only responsible for part of the cutting, such that the cutting forces can be dispersed and the chips can be shunted, thereby reducing the cutting resistance of each cutting tooth and reducing the cutting heat. Furthermore, the hollow drill bit 10' constructed in this way is also helpful to reduce the areas of the chips and enable easy removal of the chips, thus making the cutting process smoother and helping to prolong the service life of the hollow drill bit 10'.

Although FIG. 5 shows the drill head 11 and the shank 12 formed integrally, in other embodiments, the hollow drill bit 10 may also include the drill head and the shank formed separately, and the drill head and the shank are detachably coupled together. For example, a drill head 11' for coupling to a corresponding shank (not shown) is shown in FIGS. 11A and 11B.

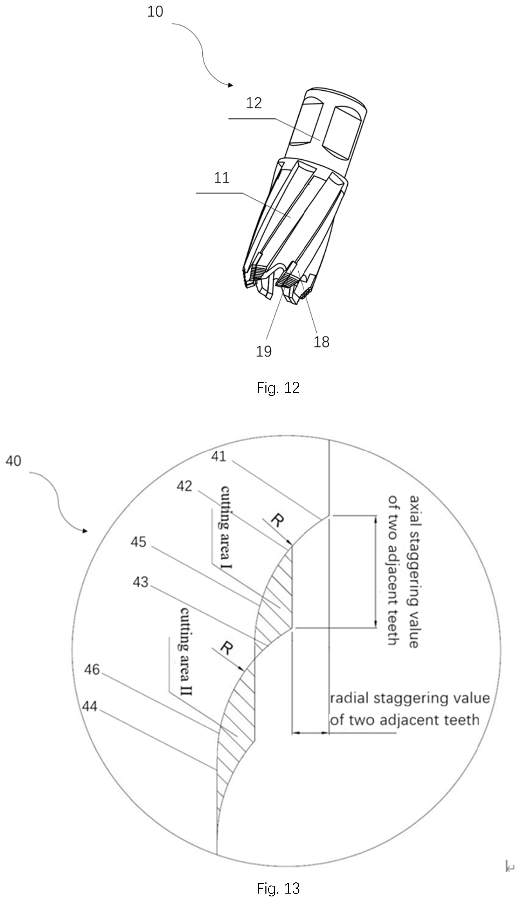

In the embodiment shown in FIG. 5, the drill head 11 of the hollow drill bit 10 may be integrally made of the same material. In other embodiments, for example, in the embodiment shown in FIG. 12, the drill head 11 of the hollow drill bit 10 may also include a base portion 18, and a hard material portion 19 which is welded onto the base portion 18 at a surface of each cutting tooth 13 facing the workpiece to be machined. The hard material portion 19 may be made of hard alloy, for example.

FIG. 13 is a schematic view showing a circumferential step segment 42 on a first cutting tooth 41 and a circumferential step segment 44 on a second cutting tooth 43 rotated to the same circumferential position, of a hollow drill bit 40 according to some embodiments of the present invention, as viewed in a direction perpendicular to the axial direction. As shown in FIG. 13, the major cutting edges 45, 46 of the two circumferential step segments shown may each be a single-section arc-shaped cutting edge; the arc-shaped portion may have a radius of curvature R and may be recessed inward toward the working rotation axis in the radial direction. The hatched portions in the figure denote the cutting regions, respectively.

FIG. 14 is a schematic view showing a circumferential step segment 52 on a first cutting tooth 51 and a circumferential step segment 54 on a second cutting tooth 53 rotated to the same circumferential position, of a hollow drill bit 50 according to some embodiments of the present invention, as viewed in a direction perpendicular to the axial direction. As shown in FIG. 14, the major cutting edges 55, 56 of the two circumferential step segments shown may each be a single-section arc-shaped cutting edge; the arc-shaped portion may have a radius of curvature R and may be protruded outward away from the working rotation axis in the radial direction. The hatched portions in the figure denote the cutting regions, respectively.

Compared with straight cutting edges, the arc-shaped cutting edges have a larger cutting edge length. Under the action of an equal cutting force, the cutting edge per unit length is subjected to less force, thereby making the cutting process smoother and prolonging the service life of the cutting edge. It should be understood that in other unillustrated embodiments, the hollow drill bit may also include both a cutting tooth with one or more outward-protruding arc-shaped cutting edges and a cutting tooth with one or more inward-recessed arc-shaped cutting edges. The outward-protruding arc-shaped cutting edges and the inward-recessed arc-shaped cutting edges may be formed on the same cutting tooth or on different cutting teeth. It should be understood that one cutting tooth of the hollow drill bit may include a plurality of arc-shaped cutting edges; advantageously, these arc-shaped cutting edges may have the same dimensions and strike. FIG. 15 is a schematic view showing a circumferential step segment 62 on a first cutting tooth 61 and a circumferential step segment 64 on a second cutting tooth 63 rotated to the same circumferential position, of a hollow drill bit 60 according to some embodiments of the present invention, as viewed in a direction perpendicular to the axial direction. As shown in FIG. 15, one of the major cutting edges 65, 66 of the two circumferential step segments illustrated is a single-section arc-shaped cutting edge and is recessed inward toward the working rotation axis in the radial direction, while the other of the major cutting edges 65, 66 is a single-section straight cutting edge. When viewed in a direction perpendicular to the axial direction, the straight cutting edge may form a certain included angle θ with the working rotation axis. The hatched portions in the figure denote the cutting regions, respectively.

In the embodiment shown in FIG. 15, the first cutting tooth 61 including said one circumferential step segment 62 may include only a plurality of the inward-recessed arc-shaped cutting edges as illustrated, and the second cutting tooth 63 including said the other circumferential step segment 64 may include only a plurality of straight cutting edges. Advantageously, the plurality of arc-shaped cutting edges may have the same dimension and strike, and the plurality of straight cutting edges may have the same dimensions and orientations. Advantageously, the first cutting tooth 61 and the second cutting tooth 62 may have the same number of circumferential step segments. Advantageously, the first cutting tooth 61 and the second cutting tooth 62 may be arranged adjacently to each other in the circumferential direction to form a cutting tooth group, and the hollow drill bit 60 may include a plurality of cutting tooth groups.

As shown in FIG. 17, a first cutting tooth 71 of a hollow drill bit 70 according to some embodiments of the present invention includes only inward-recessed arc-shaped cutting edges, the second cutting tooth 72 includes only straight cutting edges, and the first cutting tooth 71 and the second cutting tooth 72 are arranged adjacently to each other in the circumferential direction to form a cutting tooth group. The hollow drill bit 70 may include a plurality of the aforementioned cutting tooth groups.

FIG. 16 is a schematic view showing a circumferential step segment 82 on a first cutting tooth 81 and a circumferential step segment 84 on a second cutting tooth 83 rotated to the same circumferential position, of a hollow drill bit 80 according to some embodiments of the present invention, as viewed in a direction perpendicular to the axial direction. As shown in FIG. 16, one of the major cutting edges 85, 86 of the two circumferential step segments shown is a single-section arc-shaped cutting edge and protrudes outward away from the working rotation axis in the radial direction, while the other of the major cutting edges 85, 86 is a single-section straight cutting edge. When viewed in a direction perpendicular to the axial direction, the straight cutting edge may form a certain included angle θ with the working rotation axis. The hatched portions in the figure represent the cutting regions, respectively.

In the embodiment shown in FIG. 16, the first cutting tooth 81 including said one circumferential step segment 82 may include only a plurality of the outward-protruding arc-shaped cutting edges as shown, and the second cutting tooth 83 including said the other circumferential step segment 84 may include only a plurality of straight cutting edges. Advantageously, the plurality of arc-shaped cutting edges may have the same dimension and strike, and the plurality of straight cutting edges may have the same dimension and orientation. Advantageously, the first cutting tooth 81 and the second cutting tooth 83 may have the same number of circumferential step segments. Advantageously, the first cutting tooth 81 and the second cutting tooth 83 may be arranged adjacently to each other in the circumferential direction to form a cutting tooth group, and the hollow drill bit 80 may include a plurality of cutting tooth groups.

As can be known from FIGS. 15 and 16, the hollow drill bit according to the present invention may include both a cutting tooth with one or more arc-shaped cutting edges and a cutting tooth with one or more straight cutting edges. It should be understood that the arc-shaped cutting edges and the straight cutting edges may be formed on the same cutting tooth or may be formed on different cutting teeth. Additionally, it should be understood that each of the aforesaid arc-shaped cutting teeth may be outwardly-protruding or inwardly-recessed.

Optionally, the circumferential step segments on the two cutting teeth may be staggered from each other by a certain distance in the radial direction, such that their distal ends in the axial direction are located at different axial positions. Alternatively, the circumferential step segments on the two cutting teeth may be staggered from each other by a certain distance in the axial direction, such that their inner ends in the radial direction are located at different radial positions. For example, FIGS. 13 and 14 schematically show the staggering of the circumferential step segments on the two cutting teeth in the radial direction and in the axial direction. By staggering the distal ends of different cutting teeth in the axial direction and/or staggering the inner ends of different cutting teeth in the radial direction, it is helpful to disperse the cutting force, reduce the length of the cutting edge participating in cutting, shunt the chips, reduce the cutting resistance of each cutting tooth, make the cutting process smoother and reduce the cutting heat.

Furthermore, as shown in FIGS. 13 to 16, the arc-shaped cutting edge may be configured to be recessed inward towards the working rotation axis in the radial direction, or protrude outward away from the working axis in the radial direction. Compared with the outward-protruding arc-shaped cutting edge, the included angle between a portion of the inward-recessed arc-shaped cutting edge close to the minor cutting edge and the working rotation axis is relatively small, so the resistance experienced in the axial direction is correspondingly smaller, enabling smoother cut into the workpiece to be machined. Additionally, compared with the outward-protruding arc-shaped cutting edge, the portion of the inward-recessed arc-shaped cutting edge close to the minor cutting edge has a smaller major cutting edge angle. Therefore, the load per unit length on the arc-shaped cutting edge is lower, and wearing is also correspondingly lower, which helps to improve durability. On the other hand, compared with the inward-recessed arc-shaped cutting edge, the outward-protruding arc-shaped cutting edge has higher strength, particularly better nose strength, and is less prone to chipping.

As described above, by the hollow drill bit 10 according to some embodiments of the present invention, cutting forces can be dispersed during drilling, cutting resistance and power can be reduced, cutting heat and deformation of the cutting teeth can be decreased, and chips can be shunted beneficially to reduce the area of individual chips, thus facilitating chip removal, preventing the chips from being stuck, reducing the risk of the chips being evacuated towards the core, and accordingly helping to prolong the service life of the hollow drill bit 10 and improve machining quality. Furthermore, the hollow drill bit 10 according to the embodiments of the present invention can achieve accurate positioning and easy cutting upon initial cutting into the workpiece to be machined, which reduces the likelihood of damage and scrap of the hollow drill bit 10 during use. The hollow drill bit 10 according to some embodiments of the present invention is also helpful to reduce or avoid periodic vibrations of the hollow drill bit 10 during the drilling process, making the drilling process more stable, and thus improving the machining accuracy and smoothness. Additionally, the hollow drill bit 10 according to the present invention also helps to undercut the core to reduce the brim-like structure at the bottom of the core, enabling continuous drilling through stacked workpieces.

The present invention may comprise any feature or combination of features implied or expressly disclosed herein, or a generalization thereof, and is not limited to any of the limited scopes set forth above. Any elements, features and/or structural arrangements described herein may be combined in any suitable manner.

The specific embodiments disclosed above are merely exemplary. It will be apparent to those skilled in the art who benefit from the teachings herein that the present invention may be modified and practiced in different yet equivalent manners. Accordingly, it is evident that changes and modifications may be made to the specific embodiments disclosed above, and all such variations are deemed to fall within the scope and spirit of the present invention.

## Claims

1. A hollow drill bit, **characterized in that** the hollow drill bit comprises a drill head located at a distal end of the hollow drill bit, wherein the drill head is provided with a plurality of cutting teeth distributed around a working rotation axis of the hollow drill bit, each cutting tooth comprising a plurality of cutting segments arranged in sequence in an axial direction,
wherein while being distributed sequentially towards a proximal side in the axial direction, the plurality of cutting segments is also distributed sequentially towards a radially outer side in a radial direction, thereby forming a stepped structure,
wherein the plurality of cutting segments comprise one end segment and one or more circumferential step segments, the end segment is located at a distalmost end of the corresponding cutting tooth in the axial direction and comprises an end cutting edge, the circumferential step segments are located at the proximal side of the end segment in the axial direction, and each circumferential step segment extends substantially in a circumferential direction and comprises a major cutting edge and a minor cutting edge.

2. The hollow drill bit according to claim 1, **characterized in that** the major cutting edge of the circumferential step segment is:
- configured to be a single-section type, and thus comprises a single major cutting edge section; or
- configured to be a multi-section type, and thus comprises a plurality of major cutting edge sections, with an angle being formed between every two adjacent cutting edge sections of the plurality of major cutting edge sections.

3. The hollow drill bit according to claim 1, **characterized in that** one or more of the cutting teeth each comprise a plurality of circumferential step segments, and the major cutting edges and the minor cutting edges of the plurality of circumferential step segments are respectively the same in their orientations and dimensions.

4. The hollow drill bit according to claim 1, **characterized in that** one or more of the cutting teeth each comprises a plurality of circumferential step segments, and the plurality of circumferential step segments satisfy one or more of the following items:
the major cutting edge of each circumferential step segment is configured to be a single-section type, and orientations and/or dimensions of the respective major cutting edges differ from each other at least in part;
the number of segments of the major cutting edges of the respective circumferential step segments differ from each other at least in part;
orientations and/or dimensions of the minor cutting edges of the respective circumferential step segments differ from each other at least in part.

5. The hollow drill bit according to any one of claims 1 to 4, **characterized in that** the end cutting edge and the major cutting edges of the respective circumferential step segments are each configured to be single-section type, and a rake angle of the end cutting edge and rake angles of the major cutting edges of the respective circumferential step segments are each set to between -30**°** and+30**°**.

6. The hollow drill bit according to any one of claims 1 to 4, **characterized in that**
in an axial plane, a thickness of the end segment in the radial direction and a thickness of each circumferential step segment in the radial direction are one-half to one-fifth of a wall thickness of the hollow drill bit in the radial direction respectively; and/or,
the sum of the thickness of the end segment in the radial direction and the thicknesses of the respective circumferential step segments in the radial direction is equal to the wall thickness of the hollow drill bit in the radial direction.

7. The hollow drill bit according to any one of claims 1 to 4, **characterized in that** the end cutting edge is:
- configured to be a single-section type, and thus comprises a single cutting edge section; or
- configured to be a multi-section type, and thus comprises a plurality of cutting edge sections, with an angle being formed between every two adjacent cutting edge sections of the plurality of cutting edge sections.

8. The hollow drill bit according to any one of claims 1 to 4, **characterized in that**
in an axial plane, a thickness of the end segment in the radial direction is equal to or at least partially unequal to thicknesses of the respective circumferential step segments in the radial direction; and/or
the end cutting edge and the major cutting edges of the respective circumferential step segments are each configured to be a single-section type, and a rake angle of the end cutting edge is equal to or at least partially unequal to rake angles of the major cutting edges of the respective circumferential step segments.

9. The hollow drill bit according to any one of claims 1 to 4, **characterized in that** in the axial direction, a total length of the plurality of cutting segments of each cutting tooth is not less than half of a depth of a slot between said cutting tooth and any adjacent cutting tooth.

10. The hollow drill bit according to claim 1, **characterized in that** at least two of the plurality of cutting teeth have the same tooth profile.

11. The hollow drill bit according to claim 1, **characterized in that** at least two of the plurality of cutting teeth have different tooth profiles and satisfy one or more of the following items:
the at least two cutting teeth have end segments with different configurations;
the at least two cutting teeth have different numbers of circumferential step segments;
the major cutting edges and the minor cutting edges of the circumferential step segments of the at least two cutting teeth in the same order starting from the circumferential step segment at the distalmost side in the axial direction differ from each other at least partially in their orientations and dimensions, respectively.

12. The hollow drill bit according to claim 11, **characterized in that** the at least two cutting teeth have end segments with different configurations, and satisfy one or more of the following items:
the numbers of the cutting edge sections of the end cutting edges are different;
the major cutting edge angles of the cutting edge sections located at an innermost end in the radial direction of the end cutting edges are different;
each end cutting edge is configured to be a single-section type, and the lengths and/or rake angles of the end cutting edges are different.

13. The hollow drill bit according to claim 11, **characterized in that** the at least two cutting teeth have different numbers of circumferential step segments, and the major cutting edges and the minor cutting edges of the respective circumferential step segments of the at least two cutting teeth in the same order starting from the circumferential step segment at the distalmost side in the axial direction have the same orientations and dimensions, respectively.

14. The hollow drill bit according to claim 11, **characterized in that** the respective circumferential step segments of the at least two cutting teeth in the same order starting from the circumferential step segment at the distalmost side in the axial direction satisfy one or more of the following items:
the major cutting edge of each circumferential step segment is configured to be a single-section type, and the orientations and/or dimensions of the major cutting edges of the respective circumferential step segments are different from each other;
the major cutting edge of each circumferential step segment is configured to be a single-section type, and rake angles of the major cutting edges of the respective circumferential step segments are different;
the numbers of segments of the major cutting edges of the respective circumferential step segments are different;
the orientations and/or dimensions of the minor cutting edges of the respective circumferential step segments are different.

15. The hollow drill bit according to any one of claims 10 to 14, **characterized in that** the at least two cutting teeth satisfy one or both of the following items:
distal ends in the axial direction are located at different axial positions;
inner ends in the radial direction are located at different radial positions.

16. The hollow drill bit according to claim 15, **characterized in that** the at least two cutting teeth are arranged adjacently to each other in the circumferential direction, the at least two cutting teeth constitute a cutting tooth group, and the hollow drill bit comprises a plurality of cutting tooth groups arranged in subsequence in the circumferential direction.

17. The hollow drill bit according to claim 16, **characterized in that** the at least two cutting teeth comprise a first cutting tooth and a second cutting tooth, wherein the first cutting tooth comprises one circumferential step segment and the second cutting tooth comprises two circumferential step segments.

18. The hollow drill bit according to any one of claims 1 to 4, **characterized in that** the plurality of cutting teeth is arranged at uniform intervals around the working rotation axis of the hollow drill bit.

19. The hollow drill bit according to claim 1, **characterized in that** the hollow drill bit comprises at least one first cutting tooth, the end cutting edge and the major cutting edges of the respective circumferential step segments of the first cutting tooth are each configured to be a single-section type and comprise at least one arc-shaped cutting edge, and each of the arc-shaped cutting edges is recessed inward towards the working rotation axis or protrudes outward away from the working rotation axis in the radial direction.

20. The hollow drill bit according to claim 19, **characterized in that** the first cutting tooth comprises a plurality of arc-shaped cutting edges, which have the same dimension and strike.

21. The hollow drill bit according to claim 19 or 20, **characterized in that** the first cutting tooth exclusively comprises the aforesaid arc-shaped cutting edge, and the hollow drill bit comprises at least one second cutting tooth, wherein the end cutting edge and the major cutting edges of the respective circumferential step segments of the second cutting tooth are each configured to be a single-section type and exclusively comprise straight cutting edges; preferably, the second cutting tooth comprises a plurality of the circumferential step segments, and the major cutting edges of the respective circumferential step segments have the same orientations and dimensions.

22. The hollow drill bit according to claim 21, **characterized in that** the first cutting tooth and the second cutting tooth have the same number of circumferential step segments.

23. The hollow drill bit according to claim 21 or 22, **characterized in that** the first cutting tooth and the second cutting tooth are arranged adjacently to each other in the circumferential direction to form a cutting tooth group, and the hollow drill bit comprises a plurality of cutting tooth groups.

24. The hollow drill bit according to any one of claims 21 to 23, **characterized in that** the first cutting tooth and the second cutting tooth satisfy one or both of the following items:
distal ends in the axial direction are located at different axial positions;
inner ends in the radial direction are located at different radial positions.

25. The hollow drill bit according to any one of claims 21 to 24, **characterized in that** the cutting teeth of the hollow drill bit are distributed at uniform intervals around the working rotation axis.
